# EUROPEAN PATENT APPLICATION

(11) **EP 4 116 867 A1**
(43) Date of publication of application: **11.01.2023**
(21) Application number: 20938232.4
(22) Date of filing: 30.10.2020
(51) Int. Cl.: G06K 9/00

(54) **VEHICLE TRACKING METHOD AND APPARATUS, AND ELECTRONIC DEVICE**

(30) Priority: 29.05.2020 CN 202010478496
(71) Applicant: Beijing Baidu Netcom Science Technology Co., Ltd., Beijing 100085 (CN)
(72) Inventor: ZHANG, Wei, Beijing 100085 (CN); TAN, Xiao, Beijing 100085 (CN); SUN, Hao, Beijing 100085 (CN); WEN, Shilei, Beijing 100085 (CN); ZHANG, Hongwu, Beijing 100085 (CN); DING, Errui, Beijing 100085 (CN)
(74) Representative: advotec.
(86) International application number: PCT/CN2020/125446
(87) International publication number: WO 2021/238062

(57) **Abstract**

A vehicle tracking method tracking vehiclesand apparatus, and an electronic device, relating to the technical field of artificial intelligence computer vision and intelligent transportation. The method comprises: extracting a target image at a current moment from a video stream obtained during traveling of vehicles (101); performing instance segmentation on the target image to obtain detection boxes corresponding to individual vehicles in the target image (102); extracting, from the detection box for each vehicle, a set of pixel points corresponding to each vehicle (103); processing image features of each pixel point in the set of pixel points corresponding to each vehicle to determine features of each vehicle in the target image (104); and determining, according to the features of each vehicle in the target image and the degree of matching between the features of each vehicle in past images, movement trajectory of each vehicle in the target image, wherein the past images are the first n image frames adjacent to the target image in the video stream, and n is a positive integer (105). According to the present method for tracking vehicles, the vehicle tracking efficiency is increased, and the real-time capability is high.

## Description

### CROSS REFERENCE TO RELATED APPLICATIONS

The present disclosure claims priority to Chinese patent application No. 202010478496.9, filed by BEIJING BAIDU NETCOM SCIENCE TECHNOLOGY CO., LTD. on May 29, 2020, with a title of "Method for tracking vehicles and Apparatus, and Electronic Device".

### TECHNICAL FIELD

The present disclosure relates to a field of computer technology, and more particularly to a field of artificial intelligence computer vision and intelligent transportation technology. The disclosure proposes a method and an apparatus for tracking vehicles, and an electronic device.

### BACKGROUND

Structural analysis to road traffic videos, determining vehicles in images, and tracking the vehicles are important technical capabilities for visual perception of intelligent transportation.

In the related art, a detection model is usually used to detect objects in an image and determine a detection box contained in the image. Feature extraction on the detection box is performed to determine features of a vehicle, and the vehicle is tracked according to a matching degree between the vehicle features in the image and historical detection results. However, this tracking method takes a long time and has poor real-time performance since two stages are needed to determine the detection box for the vehicle.

### SUMMARY

The disclosure provides a method for tracking vehicles, an apparatus for tracking vehicles and, an electronic device.

According to a first aspect, a method for tracking vehicles is provided. The method includes: extracting a target image at a current moment from a video stream acquired while the vehicle is driving; obtaining a detection box for each vehicle in the target image by performing instance segmentation on the target image; extracting a set of pixel points corresponding to each vehicle from the detection box for each vehicle; determining features of each vehicle in the target image by processing image features of each pixel point in the set of pixel points corresponding to each vehicle; and determining a driving trajectory of each vehicle in the target image based on a matching degree between the features of each vehicle in the target image and features of each vehicle in historical images. The historical images are first n frames of images adjacent to the target image in the video stream, where n is a positive integer.

According to a second aspect, an apparatus for tracking vehicles is provided. The apparatus includes: a first extraction module, an instance segmentation module, a second extraction module, a first determination module and a second determination module. The first extraction module is configured to extract a target image at a current moment from a video stream acquired while the vehicle is driving. The instance segmentation module is configured to obtain a detection box for each vehicle in the target image by performing instance segmentation on the target image. The second extraction module is configured to extract a set of pixel points corresponding to each vehicle from the detection box for each vehicle. The first determination module is configured to determine features of each vehicle in the target image by processing image features of each pixel point in the set of pixel points corresponding to each vehicle. The second determination module is configured to determine a driving trajectory of each vehicle in the target image based on a matching degree between the features of each vehicle in the target image and features of each vehicle in historical images. The historical images are first n frames of images adjacent to the target image in the video stream, where n is a positive integer.

According to a third aspect, an electronic device is provided. The electronic device includes at least one processor and a memory communicatively connected to the at least one processor. The memory is stored with programs executable by the at least one processor. When the instructions are executed by the at least one processor, the at least one processor is enabled to perform the method for tracking vehicles as previously described.

According to a fourth aspect, a non-transitory computer-readable storage medium is provided, storing computer instructions. The computer instructions cause a computer to perform the method for tracking vehicles as previously described.

According to the technical solutions in the embodiments of the disclosure, the detection box for each vehicle in the target image is directly obtained by instance segmentation of the target image at the current moment in the video stream, the set of pixel points corresponding to each vehicle is extracted from the detection box for each vehicle, features of each vehicle in the target image are determined by processing image features of each pixel point in the set of pixel points corresponding to each vehicle, and the driving trajectory of each vehicle in the target image is determined based on the matching degree between the features of each vehicle in the target image and the features of each vehicle in the historical images. Therefore, other objects contained in the target image are directly filtered out by instance segmentation of the target image, and the detection box for the vehicle is obtained in real time for subsequent processing, thus improving the efficiency of tracking vehicles and achieving good real-time performance.

It should be understood that the content described in this section is not intended to identify key or critical features of the embodiments of the disclosure, nor is it intended to limit the scope of the disclosure. Other features of the present disclosure will become readily understood from the following description.

### BRIEF DESCRIPTION OF THE DRAWINGS

The drawings are used to better understand the solution and do not constitute a limitation to the present disclosure, wherein:
FIG 1 is a flowchart of a method for tracking vehicles according to an embodiment of the present disclosure;
FIG 2 is a schematic diagram of marking each vehicle in a target image;
FIG 3 is a flowchart of another method for tracking vehicles according to an embodiment of the present disclosure;
FIG. 4 is a flowchart of yet another method for tracking vehicles according to an embodiment of the present disclosure;
FIG 5 is a structural schematic diagram of an apparatus for tracking vehicles according to an embodiment of the present disclosure;
FIG 6 is a structural schematic diagram of an electronic device capable according to an embodiment of the present disclosure.

### DETAILED DESCRIPTION

Example embodiments of the present disclosure will be further described in detail below in conjunction with the accompanying drawings, wherein various details of the embodiments of the present disclosure are included to facilitate understanding and should be considered as merely exemplary. Therefore, those skilled in the art should recognize that various changes and modifications may be made to the embodiments described herein without departing from the scope and spirit of the present disclosure. Likewise, for clarity and conciseness, descriptions of well-known functions and structures are omitted in the following description.

In the embodiments of the disclosure, in view of the problems in the related art that the detection box for the vehicle needs to be determined in two stages, which is time-consuming and has poor real-time performance, a method for tracking vehicles is thus proposed.

The method for tracking vehicles, apparatus for tracking vehicles, electronic device and storage medium according to the disclosure will be described in detail below with reference to the accompanying drawings.

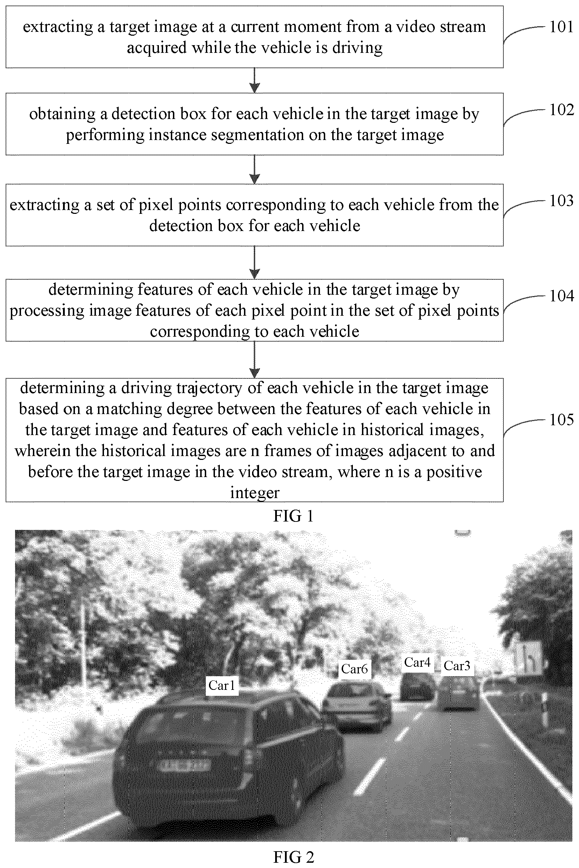

FIG. 1 is a flowchart of a method for tracking vehicles according to an embodiment of the disclosure.

As shown in FIG. 1, the method for tracking vehicles includes the following steps at 101-105.

At 101, a target image at a current moment is extracted from a video stream acquired while a vehicle is driving.

It should be noted that, the method for tracking vehicles in the embodiment of the disclosure may be executed by an apparatus for tracking vehicles during actual operations. The apparatus may be configured in any electronic device to execute the method for tracking vehicles according to the disclosure of the embodiment of the disclosure.

For example, the apparatus according to the embodiment of the disclosure may be configured in a vehicle (such as an autonomous vehicle), for tracking vehicles that is driving/ traveling on a road and visually perceiving surrounding environment of the vehicle. Thus, the driving safety of the vehicle is improved. In an example, the apparatus according to the embodiment of the disclosure may also be configured in a server of a traffic management system, for identifying violations against traffic regulations and performing traffic flow statistics, etc.

It should be noted that, the way of obtaining a video stream in the embodiment of the disclosure is related to the application scenario of the method for tracking vehicles in the embodiment of the disclosure. For example, when the method for tracking vehicles in the embodiment of the disclosure is applied in fields of automatic vehicle driving, assisted driving etc., the processor in the vehicle may establish a communication connection with a video capture device in the vehicle, and obtain a video stream captured by the video capture device in real time. For another example, when the method for tracking vehicles in the embodiment of the disclosure is applied in a traffic management scenario for identifying violations against traffic regulations and performing traffic flow statistics, the server of the traffic management system may obtain a video stream acquired by a monitoring device at a traffic intersection in real time.

The target image may be a frame of image newly acquired when the video collection device collects the video.

As a possible implementation, the video stream captured by the video capture device may be obtained in real time, and each time a new frame of image in the video stream is obtained, the obtained new frame of image may be determined as the target image at the current moment.

As another possible implementation, the target image at the current moment may also be extracted from the captured video stream in a form of frame insertion, so as to reduce data processing amount when tracking the vehicle, thus further improving the real-time performance of tracking vehicles. For example, the target image at the current moment may be extracted from the captured video stream every two frames. That is, images at the odd-numbered frames (such as the 1st, 3rd, 5th, and 7th frames) are extracted from the video stream, and each of the images at the odd-numbered frames is determined as the target image.

It should be noted that the method for tracking vehicles in the embodiments of the disclosure may also be applied to a scenario where the vehicle is not tracked in real time. For example, given video data is analyzed to determine a driving trajectory of a specific vehicle. Therefore, the apparatus for tracking vehicles in the embodiment of the disclosure may also directly obtain a piece of video data that has been captured, analyze the piece of video data, and sequentially determine each frame of image included in the video data as a target image. Alternatively, in the form of frame insertion, some images in the video data are sequentially determined as the target image. For example, the images at the odd-numbered frame in the video data may be sequentially determined as the target image.

At 102, a detection box for each vehicle is obtained in the target image by performing instance segmentation on the target image.

In the embodiments of the disclosure, any instance segmentation algorithm may be used to perform instance segmentation on the target image, so as to determine each vehicle included in the target image, and generate a detection box for each vehicle. Each vehicle in the target image is all located in its corresponding detection box, or a large portion of vehicle is located in its corresponding detection box.

It should be noted that, an appropriate instance segmentation algorithm may be selected according to actual needs or the computing performance of the electronic device, to perform instance segmentation on the target image, which is not limited in this embodiment of the disclosure. For example, an instance segmentation algorithm based on spatial embedding, a K-means clustering algorithm, and the like may be used.

At 103, a set of pixel points corresponding to each vehicle is extracted from the detection box for each vehicle.

The set of pixel points corresponding to each vehicle refers to a set composed of pixel points extracted from the target image in the detection box for the vehicle.

In the embodiment of the disclosure, after the detection box for each vehicle in the target image is determined by performing instance segmentation on the target image, most of the pixel points in the detection box for each vehicle correspond to the vehicle, and the pixel points in the detection box for each vehicle may accurately represent features of the vehicle. Therefore, in this embodiment of the disclosure, a set of pixel points corresponding to each vehicle may be extracted from the detection box for each vehicle to describe the features of each vehicle.

As a possible implementation, when the set of pixel points corresponding to the vehicle is extracted, the detection box for the vehicle may be divided into multiple sub-regions on average (for example, divided into N×N regions, where N is a positive integer greater than 1), the set of pixel points corresponding to the vehicle is generated by randomly extracting a certain number of pixel points from each sub-region of the detection box for the vehicle. For example, a preset number of pixel points (such as 100 pixel points) or a preset ratio (such as 80%) of pixel points may be randomly extracted from each sub-region of the detection box for the vehicle, to generate the set of pixel points corresponding to the vehicle, which is not limited in this embodiment of the disclosure.

As another possible implementation, since the pixel points corresponding to the vehicle are usually located in the middle of the detection box, the detection box for the vehicle may also be divided into a central region and an edge region, and a certain amount of pixel points may be randomly extracted from the central region of the detection box to constitute a set of pixel points corresponding to the vehicle.

For example, when a size of the detection box for vehicle A is 500×500 pixels, 80% of the region located in the middle of the detection box may be determined as the center region, that is, the region of 400×400 pixels located in the middle of the detection box may be determined as the center region. The position of the center point in the central region is the same as the position of the center point in the detection box, and the remaining region in the detection box is determined as the edge region. 80% of the pixel points are randomly extracted from the central region of 400 × 400 pixels, to constitute the set of pixel points corresponding to vehicle A.

As another possible implementation, when the detection box for the vehicle is divided into a central region and an edge region, a certain number of pixel points may be randomly extracted from the central region and the edge region of the detection box, respectively, to constitute the set of pixel points corresponding to the vehicle. As such, the set of pixel points corresponding to the vehicle may include not only the pixel points corresponding to the vehicle, but also the pixel points corresponding to the background near the vehicle, so as to better describe the features of the vehicle and improve the accuracy of tracking vehicles.

For example, when a size of the detection box for vehicle Ais 500×500 pixels, a circular region with a center being the center point of the detection box and a radius being 400 pixels may be determined as the central region of the detection box. The regions other than the central region are determined as the edge regions. Then, 80% of the pixel points are randomly extracted from the central region, and 80% of the pixel points are randomly extracted from the edge regions, so as to constitute the set of pixel points corresponding to vehicle A.

It should be noted that, the above examples are only exemplary and should not be regarded as limitations of the disclosure. In actual situations, the method for determining the central region of the detection box and the extracted number of pixel points or the ratio of pixel points may be selected according to actual needs and specific application scenarios, which are not limited in the embodiments of the disclosure.

At 104, features of each vehicle in the target image are determined by processing image features of each pixel point in the set of pixel points corresponding to each vehicle.

The image features of the pixel point may include a pixel value of the pixel point, a pixel value of the neighboring pixel point, a positional relationship between the pixel point and each of other pixel points in the set of pixel points, a pixel value difference and other features. In actual use, the image features of the pixel point may be selected according to actual needs, which is not limited in this embodiment of the disclosure.

The features of the vehicle refer to features for object recognition that may be determined by calculating or learning the image features of each pixel point in the set of pixel points corresponding to the vehicle. For example, the features of the vehicle may be ReID (person re-identifier) features, HOG (histogram of oriented gradient) features, Haar (Haar-like) features, and the like.

In the embodiment of the disclosure, after the set of pixel points corresponding to each vehicle is extracted, a preset algorithm may be used to calculate or learn the image features of each pixel in the set of pixel points corresponding to each vehicle, so that the vehicle is represented by the image features of each pixel in the set of pixel points, and features for each vehicle in the target image are generated.

It should be noted that, a feature type of the vehicle and the corresponding algorithm for determining features of the vehicle may be selected according to actual needs and specific application scenarios, which are not limited in the embodiments of the disclosure. For example, in order to improve the real-time performance and computational efficiency, a deep learning algorithm or an image feature extraction algorithm with high efficiency may be selected to determine the features of each vehicle in the target image.

At 105, a driving trajectory of each vehicle in the target image is determined based on a matching degree between the features of each vehicle in the target image and features of each vehicle in historical images. The historical images are first n frames of images adjacent to the target image in the video stream, where n is a positive integer.

In the embodiment of the disclosure, the matching degree between the features of each vehicle in the target image and the features of each vehicle in the historical images may be determined by means of metric learning. In particular, for a vehicle in the target image, a distance between the features of the vehicle and the features of each vehicle in the historical images may be determined by means of metric learning. The smaller the distance between the features, the more similar the features are. The inverse of the distance between the features of the vehicle and the features of each vehicle in the historical images may be determined as the matching degree between the features of the vehicle and the features of each vehicle in the historical images.

As a possible implementation, when the value of n may be equal to 1, each vehicle in the target image may be compared with the previous image adjacent to the target image in the video stream, to determine a driving trajectory of each vehicle in the target image. Optionally, for vehicle A in the target image, a vehicle whose matching degree with the features of vehicle A in the historical images is greater than a threshold value may be determined as vehicle A, and the driving trajectory of vehicle A in the target image is determined according to a driving trajectory of vehicle A in the historical images and an acquisition position of the target image. The identifier of vehicle A in the historical image is determined as an identifier of vehicle A in the target image, and the identifier of vehicle A is displayed in the target image to mark vehicle A. For example, when the identifier of vehicle A in the historical image is "Carl", the identifier "Carl" of vehicle A may be displayed on the top of vehicle A. As shown in FIG. 2, each vehicle in the target image is marked with their own identifier.

Correspondingly, when there is no vehicle whose matching degree with the features of vehicle A is greater than the threshold in the historical images, it may be determined that vehicle A is a new vehicle that appears in the video stream for the first time, so that an acquisition position of the target image may be determined as a starting point of the driving trajectory of vehicle A, a new vehicle identifier is assigned to vehicle A, and is displayed in the target image to mark the vehicle A.

As another possible implementation, when the value of n may be an integer greater than 1, each vehicle in the target image may be compared with multiple images in the video stream that are located before the target image and adjacent to the target image, to determine a driving trajectory of each vehicle in the target image, thus improving the accuracy of tracking vehicles. Optionally, for vehicle A in the target image, it may be determined first a candidate vehicle having a matching degree with the features of the vehicle A in the historical images is greater than a threshold. When only one frame of historical image contains a candidate vehicle, the candidate vehicle may be determined as vehicle A, the driving trajectory of vehicle A in the target image is determined according to the driving trajectory of vehicle A in the historical image and an acquisition position of vehicle A in the target image, and an identifier of vehicle A in the historical image is determined as the identifier of vehicle A in the target image. When there are multiple frames of images that contain candidate vehicles, it may be determined whether the candidate vehicles in the historical images are the same vehicle. When it is determined the candidate vehicles in the historical images are identical, the vehicle A may be a candidate vehicle in the historical images having a collection time closest to the collection time of the target image, and the driving trajectory of vehicle A in the target image may be determined according to the driving trajectory of said candidate vehicle having a collection time closest to the collection time of the target image and the acquisition position of the target image.

Correspondingly, when there is no vehicle having a matching degree to the features of vehicle A is greater than the threshold in each historical image, it may be determined that vehicle A is a new vehicle that appears in the video stream for the first time, so that the acquisition position of the target image may be determined as a starting point of the driving trajectory of vehicle A, a new vehicle identifier is assigned to vehicle A and is displayed in the target image to mark the vehicle A.

In the embodiment of the disclosure, when a vehicle in the historical images that matches each vehicle in the target image is determined according to the features of the vehicle, it may occur that a matching degree between the features of one vehicle in the target image and the features of multiple vehicles in the historical images is greater than the threshold value.

Optionally, in a possible implementation in the embodiment of the disclosure, when the matching degree between the features of the vehicle in the target image and the features of multiple vehicles in the historical images is greater than the threshold, a vehicle among the multiple vehicles in the historical images is determined as the vehicle in the target image, in which the vehicle in the historical image has the largest matching degree to the features of the vehicle in the target image.

Optionally, in another possible implementation in the embodiment of the disclosure, the matching degree between the features of each vehicle in the target image and the features of each vehicle in the historical images may be determined first, and each candidate vehicle with a matching degree to the features of the vehicle in the target image being greater than the threshold may be determined. As such, a matching relationship between each vehicle in the target image and each vehicle in the historical images is determined and analyzed with a Hungarian algorithm to obtain a vehicle in the historical images that uniquely matches each vehicle in the target image.

It should be noted that, the value of n may be determined according to actual needs and specific application scenarios, which is not limited in this embodiment of the disclosure. For example, when the method for tracking vehicles in the embodiment of the disclosure is applied to a traffic management scenario, since the monitoring device at a traffic intersection is fixed, only the previous image adj acent to the target image may be compared to determine a driving trajectory of each vehicle in the target image. At this time, the value of n may be 1. For another example, when the method for tracking vehicles in the embodiment of the disclosure is applied to scenarios such as automatic vehicle driving and assisted driving, the position of the video capture device is constantly changing during the vehicle driving process and there may be overtaking and being overtaken situations during the vehicle driving process. It may easily lead to inaccurate vehicle tracking results when only the previous image adjacent to the target image is compared. Therefore, n may be determined to be an integer greater than 1, to improve the accuracy of tracking vehicles.

According to the technical solutions in the embodiments of the disclosure, the detection box for each vehicle in the target image is directly obtained by instance segmentation of the target image at the current moment in the video stream, the set of pixel points corresponding to each vehicle is extracted from the detection box for each vehicle, features of each vehicle in the target image are determined by processing image features of each pixel point in the set of pixel points corresponding to each vehicle, and the driving trajectory of each vehicle in the target image is determined based on the matching degree between the features of each vehicle in the target image and the features of each vehicle in the historical images. Therefore, other objects contained in the target image are directly filtered out by instance segmentation of the target image, and the detection box for the vehicle is obtained in real time for subsequent processing, thus improving the efficiency of tracking vehicles and achieving good real-time performance.

In a possible implementation of the disclosure, a point cloud model may be used to process pixel points of the foreground region in the detection box (that is, the pixel points corresponding to the vehicle in the detection box) and pixel points of the background region, respectively, so as to determine features of each vehicle in the target image. As such, accurate and efficient extraction of vehicle features is achieved, which further improves the real-time performance of tracking vehicles and the accuracy of tracking vehicles.

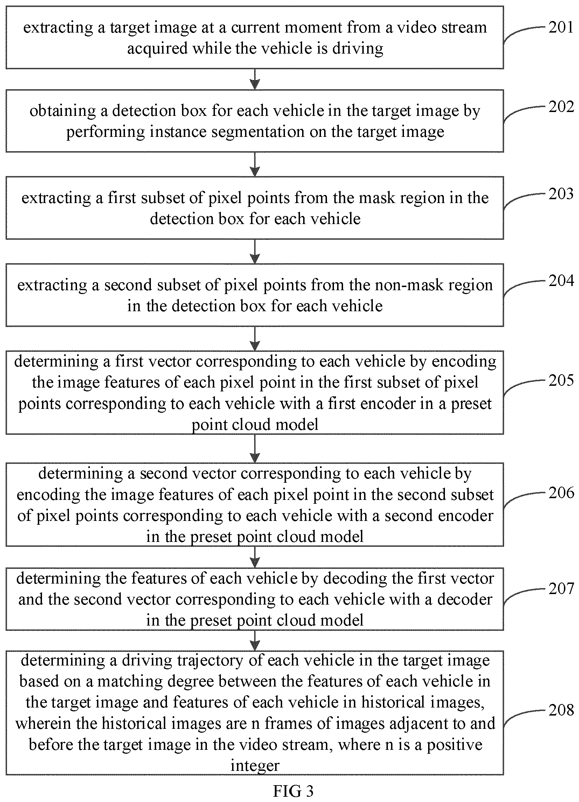

The method for tracking vehicles according to the embodiment of the disclosure may be further described below with reference to FIG. 3.

FIG. 3 is a schematic flowchart of another method for tracking vehicles according to an embodiment of the disclosure.

As shown in FIG. 3, the method for tracking vehicles includes the following steps at 201-208.

At 201, a target image at a current moment is extracted from a video stream acquired while the vehicle is driving.

At 202, a detection box for each vehicle is obtained in the target image by performing instance segmentation on the target image.

For the specific implementation process and principle of the foregoing steps at 201-202, reference may be made to the detailed description of the foregoing embodiment, which are not repeated here.

At 203, a first subset of pixel points are extracted from a mask region in the detection box for each vehicle.

The mask region in the detection box refers to a region in the detection box where the vehicle is located. The first subset of pixel points corresponding to the vehicle refers to a set of pixel points that are extracted from the mask region in the detection box for the vehicle and used to represent the vehicle.

As a possible implementation, instance segmentation results of the target image may include the detection box for each vehicle in the target image and the mask region within the detection box, which are output at the same time. That is to say, the instance segmentation algorithm may be used to identify each vehicle in the target image, and generate a detection box for each vehicle as well as a mask region corresponding to the vehicle in each detection box. The region in each detection box except the mask region is a non-mask region corresponding to the background region. That is, the detection box for each vehicle may include a mask region and a non-mask region.

It should be noted that, in actual use, the algorithm for instance segmentation of the target image may be any instance segmentation algorithm that may directly identify a specific type of object and output a detection box and a mask region corresponding to the specific type of object at the same time, which is not limited in the embodiments of the disclosure. For example, it may be an instance segmentation algorithm based on clustering, such as an instance segmentation algorithm based on spatial embedding, a K-means clustering algorithm, and the like.

In the embodiment of the disclosure, since the mask region corresponding to the vehicle in the detection box may represent the corresponding region of the vehicle in the detection box, the pixel points of the mask region corresponding to the vehicle in the detection box may accurately describe features of the vehicle itself. Therefore, a certain number of pixel points may be randomly extracted from the mask region corresponding to the vehicle in the detection box to form a first subset of pixel points corresponding to each vehicle, so as to accurately describe the features (such as color features, shape features, brand features, etc.) of each vehicle.

As a possible implementation, the number of pixel points included in the first subset of pixel points may be preset, so that a preset number of pixel points may be randomly selected from the mask region corresponding to each vehicle in the detection box to form the first subset of pixel points corresponding to each vehicle. For example, when the preset number is 500, 500 pixel points may be randomly extracted from the mask region corresponding to each vehicle in the detection box to form the first subset of pixel points corresponding to each vehicle.

As another possible implementation, a ratio between the number of pixel points in the first subset of pixel points and the number of pixel points in the mask region may also be preset, so as to randomly extract the preset ratio of pixel points from the mask region corresponding to each vehicle in the detection box, so as to constitute the first subset of pixel points corresponding to each vehicle. For example, when the preset ratio is 80% and the number of pixel points in the mask region corresponding to the vehicle A in the detection box is 1000, 800 pixel points may be randomly extracted from the mask region corresponding to the vehicle A in the detection box, to form a first subset of pixel points corresponding to vehicle A.

It should be noted that, the manner of extracting the first subset of pixel points from the mask region may include, but is not limited to, the situations listed above. In actual use, an appropriate extraction method may be selected according to actual needs and specific application scenarios, which is not limited in this embodiment of the disclosure.

At 204, a second subset of pixel points are extracted from a non-mask region in the detection box for each vehicle.

The non-mask region in the detection box refers to a corresponding region of the background in the detection box other than the vehicle in the detection box. The second subset of pixel points refers to one set of pixel points that are extracted from the non-mask region in the detection box for the vehicle and used to represent the background of the vehicle.

As a possible implementation, since the instance segmentation results of the target image may include a detection box for each vehicle in the target image and a mask region in the detection box that are output the at the same time, it is possible to directly determine a region in each detection box except the mask region as the non-mask region within each detection box.

In the embodiment of the disclosure, since the color and shape of the vehicles have great similarity, it easily leads to different vehicles being determined as the same vehicle when the vehicle features are only described by the features of the pixel points of the vehicle itself, which leads to inaccurate vehicle tracking results. Therefore, in a possible implementation according to the embodiment of the disclosure, the vehicle features may be described in consideration of pixel points for the background in each detection box as an auxiliary manner, so as to increase the difference between the vehicle features through the background features of the vehicle, thus improving the accuracy of tracking vehicles. Therefore, a certain number of pixel points may be randomly extracted from the non-mask region in the detection box for each vehicle to form a second subset of pixel points for each vehicle, so as to accurately describe the background features of each vehicle.

As a possible implementation, the number of pixel points included in the first subset of pixel points may be the same as the number of pixel points included in the second subset of pixel points, so that the features of the vehicle itself and the background features of the vehicle are fused in a balanced manner. Therefore, the vehicle feature description is more accurate and the accuracy of tracking vehicles is improved. Therefore, the number of pixel points included in both the first subset of pixel points and the second subset of pixel points may be preset. A preset number of pixel points are randomly extracted from the mask region in the detection box for each vehicle to form a first subset of pixel points corresponding to each vehicle, and a preset number of pixel points are randomly extracted from the non-mask region in the detection box for each vehicle to form a second subset of pixel points corresponding to each vehicle.

For example, the preset number is 500. For vehicle A in the target image, 500 pixel points may be randomly extracted from the mask region in the detection box for vehicle A to form a first subset of pixel points corresponding to vehicle A, and another 500 pixel points are randomly extracted from the non-mask region in the detection box for vehicle A to form a second subset of pixel points corresponding to vehicle A.

As another possible implementation, different weights may also be assigned to the first pixel point subset and the second pixel point subset, so that there are more pixel points that contribute more to representing vehicle features in the extracted set of pixel points while there are fewer pixel points that contribute less to representing the vehicle features in the extracted set of pixel points. It should be noted that, the weights for the first subset of pixel points and the second subset of pixel points may be calibrated according to a large amount of experimental data, which is not limited in this embodiment of the disclosure.

For example, the preset number is 500, the weight for the first subset of pixel points is 1, and the weight for the second subset of pixel points is 0.8, which are calibrated by experimental data. For vehicle A in the target image, 500 pixel points are randomly extracted from the mask region in the detection box to form the first subset of pixel points corresponding to vehicle A, and 400 pixel points are randomly extracted from the non-mask region in the detection box to form the second subset of pixel points corresponding to vehicle A.

As yet another possible implementation, the number of pixel points included in the second subset of pixel points may also be irrelevant to the number of pixel points included in the first subset of pixel points. That is, it may be individually preset that the number of pixel points included in the second subset of pixel points, or a ratio between the number of pixel points in the second subset of pixel points and the number of pixel points in the non-mask region. Then, the second subset of pixel points are extracted from the non-mask region in the same way as the first subset of pixel points extracted in the step at 204. For the specific implementation process and principle, reference may be made to the detailed description of step at 204, which will not be repeated here.

At 205, a first vector corresponding to each vehicle is determined by encoding the image features of each pixel point in the first subset of pixel points corresponding to each vehicle with a first encoder in a preset point cloud model.

The preset point cloud model refers to a pre-trained model that may process a set of points input to generate a feature representation corresponding to the set of points.

The first vector corresponding to the vehicle may refer to the feature representation of the pixel points of the vehicle itself, and may be used to represent the features of the vehicle itself.

The image features of the pixel point may include RGB pixel values of the pixel point, and the like.

In the embodiment of the disclosure, the point cloud model may directly generate the feature representation of point set data according to the input disordered point set data. The point cloud model is used to generate the features of the vehicle, which may realize high efficiency of extracting the vehicle features. As a possible implementation, the feature type of the vehicle may be predetermined, for example, a ReID feature. A large number of sample images containing the vehicle may be obtained, a detection box corresponding to each vehicle and a mask region in the detection box are generated for each of the sample images by performing instance segmentation on each of the sample images. The ReID feature extraction algorithm is used to determine first sample ReID features of a mask region corresponding to each vehicle in each sample image, and a first subset of sample pixel points are extracted from the mask region in the detection box. Finally, the initial point cloud model is used to learn the corresponding relationship between the first sample ReID features corresponding to each vehicle and the first subset of sample pixel points, and to generate the first encoder in the preset point cloud model. As a result, the first encoder in the preset point cloud model learns the correlation between the first ReID features of the vehicle and the first subset of pixel points. Therefore, image features of each pixel point in the first subset of pixel points corresponding to the vehicle may be input into the first encoder in the preset point cloud model, so that the first encoder encodes the RGB pixel values of each pixel point in the first subset of pixel points and generates the first vector corresponding to the vehicle, that is, ReID features of the vehicle itself.

At 206, a second vector corresponding to each vehicle is determined by encoding the image features of each pixel point in the second subset of pixel points corresponding to each vehicle with a second encoder in the preset point cloud model.

The second vector corresponding to the vehicle may refer to feature representation of pixel points of the vehicle background, and may be used to represent background features of the vehicle.

It should be noted that, the first subset of pixel points corresponding to the vehicle is used to characterize the features of the vehicle itself, and the second subset of pixel points corresponding to the vehicle background is used to characterize the background features of the vehicle. Therefore, the point cloud model may be trained to generate a second encoder different from the first encoder. The second vector is generated by encoding the second subset of pixel points, which may more accurately represent the background features of the vehicle.

In the embodiment of the disclosure, after the detection box corresponding to each vehicle and the mask region are generated for each sample image by performing instance segmentation on each sample image, the ReID feature extraction algorithm may be used to determine second sample ReID features of the non-mask region in a detection box corresponding to each vehicle in each sample image, and a second subset of sample pixel points are extracted from the non-mask region in the detection box. Finally, the initial point cloud model is used to learn the corresponding relationship between the second sample ReID features corresponding to each vehicle and the second subset of sample pixel points, and to generate the second encoder in the preset point cloud model. As a result, the second encoder in the preset point cloud model learns the correlation between the second ReID features of the vehicle and the second subset of pixel points. Therefore, image features of each pixel point in the second subset of pixel points corresponding to the vehicle may be input into the second encoder in the preset point cloud model, so that the second encoder encodes the RGB pixel values of each pixel point in the second subset of pixel points and generates the second vector corresponding to the vehicle, that is, ReID features of a background region of the vehicle.

At 207, features of each vehicle are determined by decoding the first vector and the second vector corresponding to each vehicle with a decoder in the preset point cloud model.

In the embodiment of the disclosure, since different network branches in the preset point cloud model are used, vector representation of the vehicle features and vector representation of the vehicle background features are respectively determined. Furthermore, the decoder in the preset point cloud model may also be used to fuse the first and second vectors corresponding to each vehicle and generate features for each vehicle.

Optionally, in a possible implementation of the disclosure, the decoder in the preset point cloud model may be used to fuse the first and second vectors corresponding to each vehicle by maximum pooling of the first vector and the second vector and generate features for each vehicle.

At 208, a driving trajectory of each vehicle in the target image is determined based on a matching degree between the features of each vehicle in the target image and features of each vehicle in historical images. The historical images are first n frames of images adjacent to the target image in the video stream, where n is a positive integer.

For the specific implementation process and principle of the foregoing step at 208, reference may be made to the detailed description of the foregoing embodiment, which are not repeated here.

According to the technical solutions in the embodiments of the disclosure, the detection box for each vehicle in the target image and the mask region are directly obtained by instance segmentation of the target image at the current moment in the video stream. The first subset of pixel points are extracted from the mask region in the detection box for each vehicle, for representing the foreground features of the vehicle. The second subset of pixel points are extracted from the non-mask region in the detection box for each vehicle, for representing the background features of the vehicle. The preset point cloud model is used to generate features of each vehicle based on the extracted set of pixel points. The driving trajectory of each vehicle in the target image is determined according to the matching degree between the features of each vehicle in the target image and the features of each vehicle in the historical images. Therefore, the foreground features and background features of each vehicle are fused by using the point cloud model. The accurate and efficient extraction of vehicle features is achieved, which further improves the real-time performance of tracking vehicles and the accuracy of tracking vehicles.

In a possible implementation of the disclosure, a clustering algorithm may be used to realize instance segmentation of the target image, so as to directly generate a detection box for each vehicle, thus improving the real-time performance of tracking vehicles.

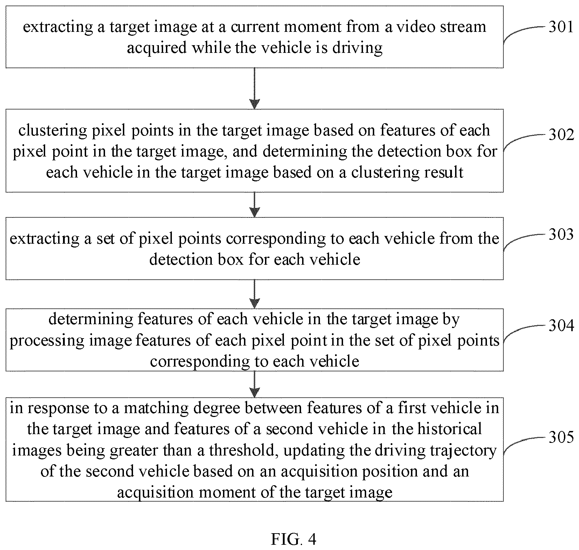

The method for tracking vehicles according to the embodiment of the disclosure may be further described below with reference to FIG. 4.

FIG. 4 is a schematic flowchart of still another method for tracking vehicles according to an embodiment of the disclosure.

As shown in FIG. 4, the method for tracking vehicles includes the following steps at 301-305.

At 301, a target image at a current moment is extracted from a video stream acquired while a vehicle is driving.

For the specific implementation process and principle of the foregoing step at 301, reference may be made to the detailed description of the foregoing embodiment, which are not repeated here.

At 302, pixel points in the target image are clustered based on features of each pixel point in the target image, and the detection box for each vehicle in the target image is determined based on a clustering result.

The features of the pixel point may include features such as a pixel value of the pixel point, a neighboring pixel point, and a pixel value of the neighboring pixel point. The features of the pixel points may be selected according to actual needs, which is not limited in this embodiment of the disclosure.

In this embodiment of the disclosure, a clustering algorithm may be used to cluster the features of each pixel point in the target image, so as to classify each pixel point in the target image and determine whether each pixel point in the target image is a pixel point corresponding to the vehicle and whether each pixel point in the target image is a pixel corresponding to the same vehicle. Further, a detection box for each vehicle is generated according to the pixel points corresponding to each vehicle. That is, each detection box may include all pixel points corresponding to the same vehicle.

As a possible implementation, an instance segmentation algorithm based on spatial embedding may be used to analyze the features of each pixel point in the target image, so as to cluster each pixel point in the target image, and directly generate the detection box for each vehicle according to the clustering result. The instance segmentation is completed in one step, with good real-time performance. Moreover, the instance segmentation algorithm based on spatial embedding may learn different clustering radii for different types of instances, and the accuracy of instance segmentation is high.

At 303, a set of pixel points corresponding to each vehicle is extracted from the detection box for each vehicle.

At 304, features of each vehicle in the target image are determined by processing image features of each pixel point in the set of pixel points corresponding to each vehicle.

For the specific implementation process and principle of the above steps at 303-304, reference may be made to the detailed description of the above embodiment, which are not repeated here.

At 305, in response to a matching degree between features of a first vehicle in the target image and features of a second vehicle in the historical images being greater than a threshold, the driving trajectory of the second vehicle is updated based on an acquisition position and an acquisition moment of the target image.

The first vehicle refers to any vehicle in the target image. The second vehicle refers to a vehicle that not only exists in the historical images, but also exists in the target image.

In the embodiment of the disclosure, the matching degree between the features of each vehicle in the target image and the features of each vehicle in the historical images may be determined by means of metric learning. Specifically, for a vehicle in the target image, a distance between the features of the vehicle and the features of each vehicle in the historical images may be determined by means of metric learning. The smaller the distance between the features, the more similar the features are. The inverse of the distance between the features of the vehicle and the features of each vehicle in the historical images may be determined as the matching degree between the features of the vehicle and the features of each vehicle in the historical images.

As a possible implementation, for a first vehicle in the target image, a vehicle in the historical images with a matching degree to the features of the first vehicle being greater than the threshold may be determined as the second vehicle. Then, the driving trajectory of the second vehicle is updated based on the driving trajectory of the second vehicle in the historical image and the acquisition position of the target image, by adding the acquisition position of the target image as a new trajectory point into the driving trajectory of the second vehicle.

As another possible implementation, the driving trajectory of the vehicle may include not only the position information of the vehicle, but also moment information of the vehicle driving to each trajectory point in the driving trajectory. Therefore, in the embodiment of the disclosure, when the acquisition position of the target image is added as a newly added point to the driving trajectory of the second vehicle, the acquisition moment of the target image may also be added as moment information of the newly added point to the driving trajectory of the second vehicle. Thus, the accuracy and richness of the vehicle tracking information are improved.

For example, when the acquisition position of the target image is used as a newly added point of the driving trajectory of the second vehicle and added to the driving trajectory of the second vehicle, the newly added point may be highlighted, the newly added point may be connected to the point added at the previous adjacent moment, and the moment information of the newly added point (that is, the acquisition moment of the target image) is displayed near the newly added point.

Correspondingly, when there is no second vehicle in the historical images with a matching degree to the features of the first vehicle being greater than the threshold, it may be determined that the first vehicle is a new vehicle that appears in the video stream for the first time, the acquisition position of the target image may be determined as the starting point of the driving trajectory of the first vehicle, and the acquisition moment of the target image is added to the driving trajectory of the first vehicle, as moment information of the starting point.

According to the technical solutions of the embodiments of the disclosure, the pixel points in the target image are clustered to directly obtain the detection box for each vehicle in the target image, and the set of pixel points corresponding to each vehicle are extracted from the detection box for each vehicle. Then, the image features of each pixel point in the set of pixel points corresponding to each vehicle are processed to determine the features of each vehicle in the target image. When the matching degree between the features of the first vehicle in the target image and the features of the second vehicle in the historical images is greater than the threshold, the driving trajectory of the second vehicle is updated according to the acquisition position and acquisition moment of the target image. As a result, the instance segmentation of the target image is realized through the clustering algorithm, other objects contained in the target image are directly filtered out, the detection box for each vehicle in the target image is obtained in real time, and the moment information is integrated into the driving trajectory of each vehicle. Thus, not only the real-time performance of tracking vehicles is improved, but also the accuracy and richness of vehicle tracking information are further improved.

In order to realize the above embodiments, the disclosure also proposes an apparatus for tracking vehicles.

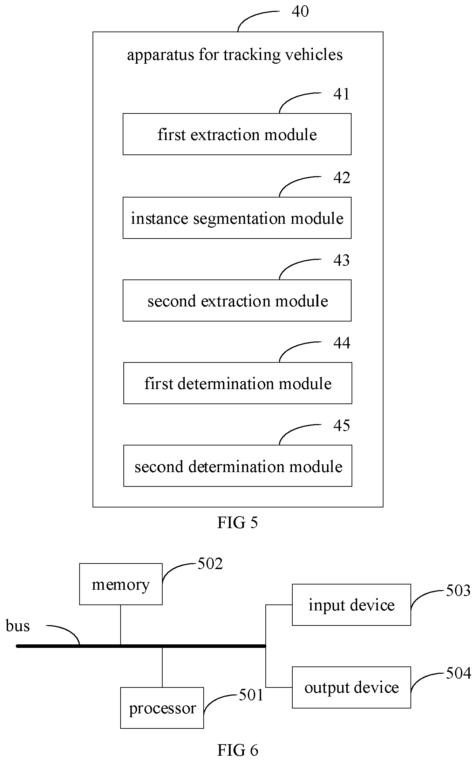

FIG 5 is a structural schematic diagram of an apparatus for tracking vehicles according to an embodiment of the present disclosure;

As shown in FIG. 5, the apparatus 40 for tracking vehicles includes: a first extraction module 41, configured to extract a target image at a current moment from a video stream acquired while the vehicle is driving; an instance segmentation module 42, configured to obtain a detection box for each vehicle in the target image by performing instance segmentation on the target image; a second extraction module 43, configured to extract a set of pixel points corresponding to each vehicle from the detection box for each vehicle; a first determination module 44, configured to determine features of each vehicle in the target image by processing image features of each pixel point in the set of pixel points corresponding to each vehicle; and a second determination module 45, configured to determine a driving trajectory of each vehicle in the target image based on a matching degree between the features of each vehicle in the target image and features of each vehicle in historical images. The historical images are first n frames of images adjacent to the target image in the video stream, where n is a positive integer.

In actual use, the apparatus for tracking vehicles according to the embodiments of the disclosure may be configured in any electronic device to execute the foregoing method for tracking vehicles.

According to the technical solutions in the embodiments of the disclosure, the detection box for each vehicle in the target image is directly obtained by instance segmentation of the target image at the current moment in the video stream, the set of pixel points corresponding to each vehicle is extracted from the detection box for each vehicle, features of each vehicle in the target image are determined by processing image features of each pixel point in the set of pixel points corresponding to each vehicle, and the driving trajectory of each vehicle in the target image is determined based on the matching degree between the features of each vehicle in the target image and the features of each vehicle in the historical images. Therefore, other objects contained in the target image are directly filtered out by instance segmentation of the target image, and the detection box for the vehicle is obtained in real time for subsequent processing, thus improving the efficiency of tracking vehicles and achieving good real-time performance.

In a possible implementation of the disclosure, the detection box for each vehicle includes a mask region and a non-mask region. The second extraction module 43 includes: a first extraction unit, configured to extract a first subset of pixel points from the mask region in the detection box for each vehicle; and a second extraction unit, configured to extract a second subset of pixel points from the non-mask region in the detection box for each vehicle.

Further, in another possible implementation of the disclosure, the first determination module 44 includes: a first determination unit, configured to determine a first vector corresponding to each vehicle by encoding the image features of each pixel point in the first subset of pixel points corresponding to each vehicle with a first encoder in a preset point cloud model; a second determination unit, configured to determine a second vector corresponding to each vehicle by encoding the image features of each pixel point in the second subset of pixel points corresponding to each vehicle with a second encoder in the preset point cloud model; and a third determination unit, configured to determine the features of each vehicle by decoding the first vector and the second vector corresponding to each vehicle with a decoder in the preset point cloud model.

Further, in another possible implementation of the disclosure, a number of pixel points included in the first subset of pixel points is the same as a number of pixel points included in the second subset of pixel points.

Further, in another possible implementation of the disclosure, the instance segmentation module 42 includes: a clustering unit, configured to cluster pixel points in the target image based on features of each pixel point in the target image, and determine the detection box for each vehicle in the target image based on a clustering result.

Further, in another possible implementation form of the disclosure, the above-mentioned second determination module 45 includes: an updating unit, configured to in response to a matching degree between features of a first vehicle in the target image and features of a second vehicle in the historical images being greater than a threshold, update the driving trajectory of the second vehicle based on an acquisition position and an acquisition moment of the target image.

It should be noted that the foregoing explanations on the embodiments of the method for tracking vehicles shown in FIG. 1, FIG. 3, and FIG. 4 are also applicable to the apparatus for tracking vehicles 40 in this embodiment, which will not be repeated here.

According to the technical solutions in the embodiments of the disclosure, the detection box for each vehicle in the target image and the mask region are directly obtained by instance segmentation of the target image at the current moment in the video stream. The first subset of pixel points are extracted from the mask region in the detection box for each vehicle, for representing the foreground features of the vehicle. The second subset of pixel points are extracted from the non-mask region in the detection box for each vehicle, for representing the background features of the vehicle. The preset point cloud model is used to generate features of each vehicle based on the extracted set of pixel points. The driving trajectory of each vehicle in the target image is determined according to the matching degree between the features of each vehicle in the target image and the features of each vehicle in the historical images. Therefore, the foreground features and background features of each vehicle are fused by using the point cloud model. The accurate and efficient extraction of vehicle features is achieved, which further improves the real-time performance of tracking vehicles and the accuracy of tracking vehicles.

According to the embodiments of the disclosure, the disclosure further provides an electronic device and a readable storage medium.

As shown in FIG. 6, it is a block diagram of an electronic device of a method for tracking vehicles according to an embodiment of the disclosure. The electronic device is intended to represent various forms of digital computers, such as laptops, desktops, workstations, personal digital assistants, servers, blade servers, mainframe computers, and other suitable computers. The electronic device may also represent various forms of mobile devices, such as a personal digital processing, a cellular phone, a smart phone, a wearable device and other similar computing devices. The components, connections and relationships of the components, and functions of the components illustrated herein are merely examples, and are not intended to limit the implementation of the present disclosure described and/or claimed herein.

As shown in FIG. 6, the electronic device includes: one or more processors 501, a memory 502, and interfaces for connecting various components, including a high-speed interface and a low-speed interface. The various components are interconnected by different buses and may be mounted on a common motherboard or mounted in other ways as needed. The processor may process instructions executed within the electronic device, including instructions stored in or on memory to display graphical information of the GUI (graphical user interface) on an external input/output device, such as a display device coupled to the interface. In other implementations, multiple processors and/or multiple buses may be used with multiple memories and multiple memories, if desired. Similarly, multiple electronic devices may be connected, and each device provides some necessary operations (for example, as a server array, a group of blade servers, or a multiprocessor system). In FIG. 6, a processor 501 is taken as an example.

The memory 502 is a non-transitory computer-readable storage medium according to the disclosure. The memory is configured to store instructions executable by at least one processor, so that the at least one processor is caused to execute the method for tracking vehicles according to the disclosure. The non-transitory computer readable storage medium according to the present disclosure is configured to store computer instructions. The computer instructions are configured to enable a computer to execute the method for tracking vehicles according to the disclosure.

As the non-transitory computer readable storage medium, the memory 502 may be configured to store non-transitory software programs, non-transitory computer executable programs and modules, such as program instructions/modules (such as, the first extraction module 41, the instance segmentation module 42, the second extraction module 43 , the first determination module 44 and the second determination module 45 shown in FIG. 5) corresponding to the method for driving the applet according to embodiments of the present disclosure. The processor 501 executes various functional applications and data processing of the server by operating non-transitory software programs, instructions and modules stored in the memory 502, that is, implements the method for tracking vehicles according to the above method embodiment.

The memory 502 may include a storage program region and a storage data region. The storage program region may store an operating system, an application program required for at least one function. The storage data region may store data created according to usage of the electronic device for tracking vehicles. In addition, the memory 502 may include a high-speed random access memory, and may also include a non-transitory memory, such as at least one disk memory device, a flash memory device, or other non-transitory solid-state memory devices. In some embodiments, the memory 502 may optionally include memories remotely located to the processor 501, and these remote memories may be connected to the electronic device capable of implementing the method for driving the applet via a network. Examples of the above network include, but are not limited to, the Internet, an intranet, a local region network, a mobile communication network and combinations thereof.

The electronic device of the method for tracking vehicles may further include: an input device 503 and an output device 504. The processor 501, the memory 502, the input device 503 and the output device 504 may be connected by a bus or in other ways. In FIG. 6, the bus is taken as an example.

The input device 503 may receive inputted digital or character information, and generate key signal input related to user setting and function control of the electronic device capable of driving the applet, such as a touch screen, a keypad, a mouse, a track pad, a touch pad, an indicator stick, one or more mouse buttons, a trackball, a joystick and other input device. The output device 504 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some implementations, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit the data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local region network (LAN), a wide region networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

According to the technical solutions in the embodiments of the disclosure, the detection box for each vehicle in the target image is directly obtained by instance segmentation of the target image at the current moment in the video stream, the set of pixel points corresponding to each vehicle is extracted from the detection box for each vehicle, features of each vehicle in the target image are determined by processing image features of each pixel point in the set of pixel points corresponding to each vehicle, and the driving trajectory of each vehicle in the target image is determined based on the matching degree between the features of each vehicle in the target image and the features of each vehicle in the historical images. Therefore, other objects contained in the target image are directly filtered out by instance segmentation of the target image, and the detection box for the vehicle is obtained in real time for subsequent processing, thus improving the efficiency of tracking vehicles and achieving good real-time performance.

It should be understood that, steps may be reordered, added or deleted by utilizing flows in the various forms illustrated above. For example, the steps described in the present disclosure may be executed in parallel, sequentially or in different orders, so long as desired results of the technical solution disclosed in the present disclosure may be achieved, there is no limitation here.

The above detailed implementations do not limit the protection scope of the present disclosure. It should be understood by the skilled in the art that various modifications, combinations, subcombinations and substitutions may be made based on design requirements and other factors. Any modification, equivalent substitution and improvement made within the spirit and the principle of the present disclosure shall be included in the protection scope of present disclosure.

## Claims

1. A method for tracking vehicles, comprising:
extracting a target image at a current moment from a video stream acquired while the vehicle is driving;
obtaining a detection box for each vehicle in the target image by performing instance segmentation on the target image;
extracting a set of pixel points corresponding to each vehicle from the detection box for each vehicle;
determining features of each vehicle in the target image by processing image features of each pixel point in the set of pixel points corresponding to each vehicle; and
determining a driving trajectory of each vehicle in the target image based on a matching degree between the features of each vehicle in the target image and features of each vehicle in historical images, wherein the historical images are first n frames of images adjacent to the target image in the video stream, where n is a positive integer.

2. The method according to claim 1, wherein the detection box for each vehicle includes a mask region and a non-mask region, and extracting the set of pixel points corresponding to each vehicle from the detection box for each vehicle comprises:
extracting a first subset of pixel points from the mask region in the detection box for each vehicle; and
extracting a second subset of pixel points from the non-mask region in the detection box for each vehicle.

3. The method according to claim 2, wherein processing the image features of each pixel point in the set of pixel points corresponding to each vehicle comprises:
determining a first vector corresponding to each vehicle by encoding the image features of each pixel point in the first subset of pixel points corresponding to each vehicle with a first encoder in a preset point cloud model;
determining a second vector corresponding to each vehicle by encoding the image features of each pixel point in the second subset of pixel points corresponding to each vehicle with a second encoder in the preset point cloud model; and
determining the features of each vehicle by decoding the first vector and the second vector corresponding to each vehicle with a decoder in the preset point cloud model.

4. The method according to claim 2 or 3, wherein a number of pixel points included in the first subset of pixel points is the same as a number of pixel points included in the second subset of pixel points.

5. The method according to any one of claims 1-4, wherein obtaining the detection box for each vehicle in the target image by performing instance segmentation on the target image comprises:
clustering pixel points in the target image based on features of each pixel point in the target image, and determining the detection box for each vehicle in the target image based on a clustering result.

6. The method according to any one of claims 1-5, wherein determining the driving trajectory of each vehicle in the target image based on the matching degree between the features of each vehicle in the target image and features of each vehicle in the historical images comprises:
in response to a matching degree between features of a first vehicle in the target image and features of a second vehicle in the historical images being greater than a threshold, updating the driving trajectory of the second vehicle based on an acquisition position and an acquisition moment of the target image.

7. An apparatus for tracking vehicles, comprising:
a first extraction module, configured to extract a target image at a current moment from a video stream acquired while the vehicle is driving;
an instance segmentation module, configured to obtain a detection box for each vehicle in the target image by performing instance segmentation on the target image;
a second extraction module, configured to extract a set of pixel points corresponding to each vehicle from the detection box for each vehicle;
a first determination module, configured to determine features of each vehicle in the target image by processing image features of each pixel point in the set of pixel points corresponding to each vehicle; and
a second determination module, configured to determine a driving trajectory of each vehicle in the target image based on a matching degree between the features of each vehicle in the target image and features of each vehicle in historical images, wherein the historical images are first n frames of images adjacent to the target image in the video stream, where n is a positive integer.

8. The apparatus according to claim 7, wherein the detection box for each vehicle includes a mask region and a non-mask region, and the second extraction module comprises:
a first extraction unit, configured to extract a first subset of pixel points from the mask region in the detection box for each vehicle; and
a second extraction unit, configured to extract a second subset of pixel points from the non-mask region in the detection box for each vehicle.

9. The apparatus according to claim 8, wherein the first determination module comprises:
a first determination unit, configured to determine a first vector corresponding to each vehicle by encoding the image features of each pixel point in the first subset of pixel points corresponding to each vehicle with a first encoder in a preset point cloud model;
a second determination unit, configured to determine a second vector corresponding to each vehicle by encoding the image features of each pixel point in the second subset of pixel points corresponding to each vehicle with a second encoder in the preset point cloud model; and
a third determination unit, configured to determine the features of each vehicle by decoding the first vector and the second vector corresponding to each vehicle with a decoder in the preset point cloud model.

10. The apparatus according to claim 8 or 9, wherein a number of pixel points included in the first subset of pixel points is the same as a number of pixel points included in the second subset of pixel points.

11. The apparatus according to any one of claims 7-10, wherein the instance segmentation module comprises:
a clustering unit, configured to cluster pixel points in the target image based on features of each pixel point in the target image, and determine the detection box for each vehicle in the target image based on a clustering result.

12. The apparatus according to any one of claims 7-11, wherein the second determination module comprises:
an updating unit, configured to in response to a matching degree between features of a first vehicle in the target image and features of a second vehicle in the historical images being greater than a threshold, update the driving trajectory of the second vehicle based on an acquisition position and an acquisition moment of the target image.

13. An electronic device comprising:
at least one processor; and
a memory communicatively coupled to the at least one processor and stored with programs executable by the at least one processor;
wherein when the instructions are executed by the at least one processor, the at least one processor is enabled to perform the method for tracking vehicles according to any one of claims 1-6.

14. A non-transitory computer-readable storage medium storing computer instructions, wherein the computer instructions cause a computer to perform the method for tracking vehicles according to any one of claims 1-6.
